Europäisches Patentamt

European Patent Office

Office européen des brevets

(19)

(11) Veröffentlichungsnummer: **0 260 444**
**B1**

(12) # EUROPÄISCHE PATENTSCHRIFT

(45) Veröffentlichungstag der Patentschrift:
**10.01.90**

(21) Anmeldenummer: **87111784.2**

(22) Anmeldetag: **14.08.87**

(51) Int. Cl.⁴: **C08L 23/02**, C08K 3/22,
C08L 23/08, C08L 51/06
// (C08L23/02, 23:08,
C08K3:22),(C08L23/02, 51:06,
C08K3:22)

(54) **Weichmacherfreie Polyolefinfolie oder Polyolefinfolienbahn.**

(30) Priorität: **22.08.86 DE 3628487**

(43) Veröffentlichungstag der Anmeldung:
**23.03.88 Patentblatt 88/12**

(45) Bekanntmachung des Hinweises auf die Patenterteilung:
**10.01.90 Patentblatt 90/2**

(84) Benannte Vertragsstaaten:
**AT BE CH DE ES FR GB GR IT LI LU NL SE**

(56) Entgegenhaltungen:
**DE-A- 1 694 587
US-A- 4 181 689
US-A- 4 420 580**

(73) Patentinhaber: **ALKOR GMBH KUNSTSTOFFE,
Morgensternstrasse 9 Postfach 71 01 09,
D-8000 München 71(DE)**

(72) Erfinder: **Fink, Roland, Dipl.-Ing., Anwänden 3,
D-8026 Ebenhausen(DE)**

(74) Vertreter: **Seiler, Siegfried, c/o DEUTSCHE
SOLVAY-WERKE GmbH
Langhansstrasse 6 Postfach 11 02 70,
D-5650 Solingen 11(DE)**

## Beschreibung

Die vorliegende Erfindung betrifft eine weichmacherfreie Polyolefinfolie oder Polyolefinfolienbahn bestehend aus einem Gemisch oder einer Legierung aus mindestens einem Polyolefin mit einem teilkristallinen Anteil in Gewichtsmengen von 78 bis 99,2 Gew.-%, vorzugsweise 80 bis 98 Gew.-%, und 22 bis 0,8 Gew.-%, vorzugsweise 20 bis 2 Gew.-%, eines Gemisches bestehend aus mindestens einem feinteiligen Füllstoff oder Füllstoffgemisch und mindestens einem Co- und/oder Pfropfpolymerisat aus Ethylen oder Propylen mit ungesättigten Dicarbonsäuren, vorzugsweise Ethylen-Acrylsäure-, Ethylen-Methacrylsäure-, Ethylen-Maleinsäure-oder Ethylen-Maleinsäureanhydrid-Co- und/oder Pfropfpolymerisat, Propylen-Maleinsäure- oder Propylen-Maleinsäureanhydrid-, Propylen-Acrylsäure-Co- und/oder -Pfropfpolymerisat oder Gemische oder Legierungen von zwei oder mehreren der Copolymerisate sowie ggf. Verarbeitungshilfsmitteln, die mit bestimmten Füllstoffen in bestimmten Gewichtsverhältnissen und mit bestimmten Eigenschaften der eingesetzten Stoffe verbesserte Eigenschaften, insbesondere verbesserte Adhäsion aufweist.

Aus der EP-A 0 000 783 ist bereits eine Polypropylen-Formmasse, bestehend aus oder im wesentlichen bestehend aus

(1) 40 bis 98 Volumenteilen eines einen kristallinen Anteil von über 90 % sowie einen Schmelzindex (2,16 kg, 20 °C) von 0,1 bis 20 aufweisenden Polypropylens,

(2) 1 bis 50 Volumenteilen eines einen Schmelzindex (2,16 kg, 230 °C) von 0,1 bis 20, einen Zug-E-Modul (nach DIN 53 457) von weniger als 1000 Nmm$^{-2}$ sowie eine Glastemperatur von weniger als -20 °C aufweisenden Mischpolymerisats, das

(2.1) 100 Gewichtsteile Ethylen,

(2.2) 5 bis 40 Gewichtsteile eines Esters der Acryl- bzw. Methacrylsäure mit einem $C_1$- bis $C_8$-Alkanol und/oder eines Vinylesters einer $C_2$- bis $C_4$-Alkancarbonsäure sowie

(2.3) - gegebenenfalls - bis zu 10 Gewichtsteile Acryl- bzw. Methacrylsäure einpolymerisiert enthält, bekannt, wobei die Formmasse

(3) 1 bis 10 Volumenteile eines anorganischen, plättchenförmigen Füllstoffs, der ein Seitenverhältnis (Plättchendicke : Plättchendurchmesser) von 1 : 5 bis 1 : 600 sowie eine Plättchendicke von 0,005 bis 20 μm hat,

und die Summe der Volumenteile 100 Volumenteile beträgt.

Diese Polypropylenformmassen weisen eine gute Kältezähigkeit und gute Steifigkeitswerte auf.

Die aus den Polypropylen-Formmassen hergestellten Platten oder Folien sind jedoch nicht oder schlecht zum Verkleben mit anderen Werkstofffen zur Herstellung von Kunststoffoberflächen geeignet.

Verwendet man jedoch andererseits die Co- und Pfropfpolymeren aus Propylen und Ethylen mit ungesättigten Carbonsäuren bzw. Anhydriden allein, so ergeben sich zwar verbesserte Haftungen zu Metallen, aber nur dann, wenn die Verbindung oberhalb des Schmelzpunktes erfolgt.

Ziel und Aufgabe der vorliegenden Erfindung war es, weichmacherfreie Polyolefinfolien oder Polyolefinfolienbahnen herzustellen, die die vorgenannten Nachteile nicht aufweisen. Die Kunststoffolien oder Kunststoffolienbahnen sollten verbesserte Eigenschaften aufweisen und als adhäsive, flexible Folien zur Beschichtung von Oberflächen anderer Werkstoffe eingesetzt werden können.

Erfindungsgemäß wurde festgestellt, daß diesen Zielen und Aufgaben eine weichmacherfreie Polyolefinfolie oder Polyolefinfolienbahn bestehend aus einem Gemisch oder einer Legierung aus mindestens einem Polyolefin mit einem teilkristallinem Anteil in Gewichtsmengen von 78 bis 99,2 Gew.-%, vorzugsweise 80 bis 98 Gew.-%, und 22 bis 0,8 Gew.-%, vorzugsweise 20 bis 1,2 Gew.%, eines Gemisches bestehend aus mindestens einem feinteiligen, nicht schicht- oder plättchenförmigen Füllstoff oder Füllstoffgemisch und mindestens einem Co- und/oder Pfropfpolymerisat aus Ethylen oder Propylen mit ungesättigten Dicarbonsäuren, vorzugsweise Ethylen-Acrylsäure-, Ethylen-Methacrylsäure-, Ethylen-Maleinsäure- oder Ethylen-Maleinsäureanhydrid-Co- und/oder Pfropfpolymerisat, Propylen-Maleinsäure- oder Propylen-Maleinsäureanhydrid-, Propylen-Acrylsäure-Co- und/oder -Pfropfpolymerisat oder Gemische oder Legierungen von zwei oder mehreren der Copolymerisate sowie ggf. Verarbeitungshilfsmitteln, gerecht wird. Gemäß der Erfindung bestht das Gemisch oder die Legierung aus mindestens einem Polyolefin mit einem teilkristallinen Anteil aus einem Propylenhomopolymerisat mit einem kristallinem Anteil unter 75 %, vorzugsweise unter 70 %, Propylen-Ethylen-Co- oder Pfropfpolymerisat mit einem kristallinen Anteil unter 70 %, vorzugsweise unter 65 %, oder einem Polyethylen hoher Dichte, vorzugsweise einer Dichte über 0,94 g/cm, mit einem kristallinen Anteil unter 70 %, vorzugsweise unter 65 %.

Diese erfindungsgemäßen Polyolefinfolien oder Polyolefinfolienbahnen weisen eine verbesserte Langzeitadhäsion auf. Sie zeigen eine Verbesserung der Haftung der Polyolefinfolie oder Polyolefinfolienbahn, vorzugsweise nach Behandlung mit energiereicher Strahlung oder mit elektrischen Entladungen. Die Polyolefinfolien oder Polyolefinfolienbahnen sind leicht bedruckbar und somit als Dekorationsfolien, Werbefolien, Haftfolien, Kaschierfolien für Metalle, Holz, Holzwerkstoffe und Pappen sowie zur

EP 0 260 444 B1

Beschichtung anderer Werkstoffe geeignet. Es läßt sich insbesondere dann eine gute und dauerhafte Adhäsion mit dem Werkstoff erreichen, wenn zusätzlich die Behandlung mit energiereichen Strahlen, vorzugsweise Corona- und/oder Plasmabehandlung, erfolgt.

Das Verhältnis des nicht schicht- oder plättchenförmigen Füllstoffes zu dem Copolymerisat oder Pfropfpolymerisat auf der Basis von Ethylen oder Propylen mit ungesättigter Dicarbonsäure bzw. deren Anhydrid in der Polyolefinfolie oder Polyolefinfolienbahn beträgt 1 : 20 bis 2 : 1, vorzugsweise 1 : 10 bis 1 : 1. Der nicht schicht- oder plättchenförmige Füllstoff aus mindestens einem partikelförmigen Füllstoff, mit einer mittleren Teilchengröße oder einem mittleren Körnungsdurchmesser von kleiner als 10 µm, vorzugsweise kleiner als 5 µm, besteht aus einem Hydroxyd und/oder Oxid des Magnesiums, Aluminiums und/oder Siliciums, vorzugsweise aus einem Oxid und Silicium.

Das Ethylen- oder Propylen-Co- oder -Pfopfpolymerisat weist einen Schmelzindex 190 °C/2,16 Kp mehr als 1,5 g/10 min und einen Dicarbonsäureanteil bzw. Anhydridanteil von 1,2 bis 25 Gew.-%, vorzugsweise 1,5 bis 20 Gew.-% (bezogen auf 100 Gew.-Teile des Co- oder Pfropfpolymerisates aus Ethylen oder Propylen und ungesättigter Dicarbonsäure bzw. Dicarbonsäureanhydrid), auf.

Der Schmelzindex (190 °C/2,16 Kp) des für die weichmacherfreie Polyolefinfolie oder Polyolefinfolienbahn eingesetzten Propylenhomo- oder Propylen-Ethylen-Copolymerisates oder des Polyethylens hoher Dichte ist kleiner, vorzugsweise um mehr als die Hälfte kleiner, als der Schmelzindex (190 °C/2,16 Kp) des Co- oder Pfropfpolymerisates auf der Basis von Ethylen oder Propylen mit ungesättigter Dicarbonsäure oder deren Anhydrid.

Nach einer energiereichen Bestrahlung, elektrischer Entladung, Plasmabehandlung und dgl., vorzugsweise bei der Durchführung einer Coronabehandlung der erfindungsgemäßen weichmacherfreien Polyolefinfolie oder Polyolefinfolienbahn gelingt es, Folien oder Folienbahnen zu erhalten, die eine Oberflächenspannung von 40 bis 72 ($10^{-3}$Nm$^{-1}$), vorzugsweise 44 bis 68 ($10^{-3}$Nm$^{-1}$), (nach der Herstellung und Einwirkung energiereicher Strahlungen und gemessen nach einem Zeitraum von mindestens 6 Monaten, vorzugsweise 12 Monaten, aufweisen.

Die erfindungsgemäßen Polyolefinfolien oder Polyolefinfolienbahnen besitzen somit (nach der energiereichen Bestrahlung) eine verbesserte Langzeitadhäsion.

Nach einer Ausführungsform der Erfindung sind 5 bis 20 Gew.-%, vorzugsweise 7 bis 15 Gew.-%, des Propylenhomo- oder Propylen-Ethylen-Copolymerisates durch die gleiche Men ge Polyethylen, vorzugsweise Polyethylen hoher Dichte mit einer Dichte größer als 0,95 g/cm$^3$ und mit einem Schmelzindex 190/2,16 von 1,5 - 15 g/10 min ersetzt.

Die weichmacherfreie Polyolefinfolie oder Polyolefinfolienbahnen sind gut bedruckbar. Nach einer bevorzugten Ausführungsform ist auf der Polyolefinfolie oder Polyolefinfolienbahn partiell oder vollflächig eine Druckschicht, vorzugsweise Farbdruckschicht, angeordnet.

Nach einer bevorzugten Ausführungsform der Erfindung ist eine Lackschicht, vorzugsweise eine transparente oder translucente Lackschicht oder Siegelschicht partiell oder vollflächig die Druckschicht und ggf. nicht bedruckte Stellen der Polyolefinfolie oder Polyolefinfolienbahn überdeckend angeordnet, wobei die mittlere Schichtdicke der Lackschicht 1 bis 20 µm, vorzugsweise bis 15 µm, beträgt.

Nach einer weiteren bevorzugten Ausführungsform der Erfindung ist auf der Rückseite der Polyolefinfolie oder Polyolefinfolienbahn eine Klebstoffschicht oder eine Komponente, Härter oder Polymerisationsbestandteil oder Vorpolymerisat oder Vorkondensat der Klebstoffschicht in einer Schichtdicke von 3 bis 100 µm, vorzugsweise 5 bis 80 µm, angeordnet.

Der kristalline Anteil des Propylenhomopolymerisates muß unter 75 Gew.-%, vorzugsweise unter 70 Gew.-%, der des Propylen-Ethylen-Copolymerisates unter 70 Gew.-%, vorzugsweise unter 65 Gew.-%, liegen, da oberhalb dieses kristallinen Prozentgehaltes die adhäsiven Eigenschaften der Polyolefinfolienbahnen verschlechtert werden. Der kristalline Mindestanteil bei dem Propylenhomopolymerisat sollte größer als 15 Gew.-%, vorzugsweise größer als 20 Gew.-%, der des Propylen-Ethylen-Copolymerisates und des Polyethylens hoher Dichte größer als 13 Gew.-%, vorzugsweise größer als 18 Gew.-% sein.

Nach einer bevorzugten Ausführungsform wird eine Mischung oder Legierung von Polyethylen mit einer Dichte über 0,94 g/cm$^3$ mit Propylenhomopolymerisat und/oder Propylen-Ethylen-Copolymerisat mit einem kristallinen Anteil (bezogen auf die gesamte Kunststoffmischung) von 23 - 65 %, vorzugsweise 30 - 60 %, eingesetzt.

Als Oxide oder Hydroxide des Magnesiums, Aluminiums oder Siliziums werden Magnesiumoxid, Magnesiumhydroxid, Aluminiumoxid, Aluminiumhydroxid und/oder Siliziumoxid eingesetzt. Bevorzugt gelangt das hydrat freie Siliziumoxid (Siliziumdioxid) zum Einsatz oder Mischungen, die hydratfreies Siliziumoxid (vorzugsweise Siliziumdioxid) zu mehr als 35 Gew.% (bezogen auf 100 Gew.-% der Füllstoffe), vorzugsweise mehr als 50 Gew.-%, und als Füllstoffrestbestandteil mindestens einen anderen Füllstoff, vorzugsweise Hydroxide und/oder Oxide des Magnesiums und/oder Aluminiums, enthalten. Im Rahmen der vorliegenden Erfindung wurde jedoch festgestellt, daß das nicht hydratisierte $SiO_2$ eine wesentlich bessere Affinität als Silikate oder hydratisiertes $SiO_2$ zu den Säuregruppen des Ethylen-Acrylsäure-Copolymerisates besitzt und insbesondere, wenn es ein wesentlich niedrigeres Molekulargewicht als das Polypropylen besitzt, schon bei geringen Zusätzen von Copolymer und Füllstoff gute Haftungseigenschaften erzielt werden. Die Füllstoffmischung kann nach einer Ausführungsform zu weniger als 45 Gew.-% (bezogen auf 100 Gew.-% Füllstoffe), vorzugsweise weniger als 35 Gew.-%, organische Füllstoffe wie feinteilige Cellulose oder Cellulosefasern und/oder Stärke enthalten, wobei jedoch Nachteile bei der

3

Verarbeitung der Folie bei höheren Temperaturen auftreten können und eine genaue Temperaturführung der Folie erforderlich wird.

Die erfingungsgemäßen Folien können als Monofolien oder Verbund- bzw. Mehrschichtfolien, beispielsweise coextrudierte Folienbahnen, eingesetzt werden. Die Folienbahnen werden in Schichtdicken von 15 µm - 800 µm, vorzugsweise 50 µm - 500 um, eingesetzt. Die angegebene maximale Folienstärke wird aus wirtschaftlichen Gründen im Normalfall nicht überschritten, jedoch können auch stärkere Folienbahnen zum Einsatz gelangen.

Die Vorteile der erfindungsgemäßen Folienbahnen kommen dann besser zur Geltung, wenn sie einer oberflächenadhäsionverbessernden Behandlung, vorzugsweise einer Aktivierung durch elektrische Entladung oder durch Bestrahlung unterworfen wird. Unter den Bestrahlungsmethoden wird eine Coronabehandlung bevorzugt, jedoch können auch andere Bestrahlungsmethoden angewendet werden.

Beispiele für andere geeignete Bestrahlungsmethoden sind Elektronenbestrahlungen, Plasmabehandlung, UV-Bestrahlungen und/oder Laserbestrahlungen. Schließlich können auch andere Aktivierungsmethoden, beispielsweise Behandlung mit einer oxidierenden Flamme, Ozoneinwirkung und dgl. zum Einsatz gelangen.

Die aktivierende Oberflächenbehandlung kann bei der erfindungsgemäßen Folienbahn zu einer beliebigen Zeit vorgenommen werden. So ist es möglich, die Oberflächenaktivierung bereits unmittelbar bei oder im Anschluß an die Folienherstellung durchzuführen oder zu einem späteren Zeitpunkt. Da die Wirkung der Oberflächenaktivierung bei der Lagerung, z. B. bis zu 12 Monaten anhält, kann die Oberfläc enaktivierung bereits unmittelbar im Anschluß an die Folienbahnherstellung durchgeführt werden, ohne daß sich die nachfolgende Lagerung negativ auf die adhäsiven Eigenschaften der Folien im Sinne einer Reduzierung der Aktivierung auswirkt.

Die vorliegende Erfindung betrifft weiterhin ein Verfahren zur Herstellung weichmacherfreier Polyolefinfolien oder Polyolefinfolienbahnen bestehend aus einem Gemisch oder einer Legierung aus mindestens einem Polyolefin mit einem teilkristallinen Anteil in Gewichtsmengen von 78 bis 99,2 Gew.-%, vorzugsweise 80 bis 98 Gew.-%, und 22 bis 0,8 Gew.-%, vorzugsweise 20 bis 2 Gew.-%, eines Gemisches bestehend aus mindestens einem feinteiligen Füllstoff oder Füllstoffgemisch und mindestens einem Co- und/oder Pfropfpolymerisat aus Ethylen oder Propylen mit ungesättigten Dicarbonsäuren, vorzugsweise Ethylen-Acrylsäure-, Ethylen-Methacrylsäure-, Ethylen-Maleinsäure- oder Ethylen-Maleinsäureanhydrid-Co- und/oder Pfropfpolymerisat, Propylen-Maleinsäure- oder Propylen-Maleinsäureanhydrid-, Propylen-Acrylsäure-Co- und/oder -Pfropfpolymerisat oder Gemische oder Legierungen von zwei oder mehreren der Copolymerisate sowie ggf. Verarbeitungshilfsmitteln. Gemäß der Erfindung wird das Gemisch oder die Legierung aus mindestens einem Polyolefin, die als Polyolefin mit einem teilkristallinem Anteil aus einem Propylenhomopolymerisat mit einem kristallinem Anteil unter 75 %, vorzugsweise unter 70 %, Propylen-Ethylen-Copolymerisat mit einem kristallinen Anteil unter 70 %, vorzugsweise unter 65 %, und/oder einem Polyethylen hoher Dichte, vorzugsweise einer Dichte über 0,94 g/cm³, mit einem kristallinen Anteil unter 70 %, vorzugsweise unter 65 %, enthält, mit dem Füllstoff, sowie gegebenenfalls Verarbeitungshilfsmitteln bei Temperaturen von 10 bis 80 °C, vorzugsweise 20 bis 70 °C, über dem Schmelzpunkt oder Schmelzbereich in einer Plastifiziervorrichtung, vorzugsweise Extruder, verarbeitet und zu Folien oder Folienbahnen verformt, wobei das Verhältnis des nicht schicht- oder plättchenförmigen Füllstoffes zu dem Copolymerisat oder Pfropfpolymerisat auf der Basis von Ethylen oder Propylen mit ungesättigter Dicarbonsäure bzw. deren Anhydrid in der Polyolefinfolie oder Polyolefinfolienbahn 1 : 20 bis 1 : 2, vorzugsweise 1 : 10 bis 1 : 1, beträgt, der nicht schicht- oder plättchenförmige Füllstoff aus mindestens einem partikelförmigen Füllstoff mit einer mittleren Teilchengröße oder einem mittleren Körnungsdurchmesser von kleiner als 10 µm, vorzugsweise kleiner als 5 µm, aus einem Hydroxid und/oder Oxid des Magnesiums, Aluminiums und/oder Siliciums, vorzugsweise aus einem Oxid von Silicium, besteht. Das Ethylen- oder Propylen-Co- oder -Pfropfpolymerisat (mit ungesättigten Dicarbonsäuren) weist dabei einen Schmelzindex 190 °C/2,16 Kp mehr als 1,5 g/10 min und einen Dicarbonsäureanteil bzw. Anhydridanteil von 1,2 bis 25 Gew.-%, vorzugsweise 1,5 bis 20 Gew.-% (bezogen auf 100 Gew.-Teile des Co- oder Pfropfpolymerisates aus Ethylen oder Propylen und ungesättigter Dicarbonsäure bzw. Dicarbonsäureanhydrid), auf.

Die Polyolefinfolie, die vorzugsweise extrudiert, gegossen, gewalzt und/oder in ähnlicher Weise geformt wird, wird gemäß der Erfindung während oder nach der Herstellung mit einer energiereichen Strahlung, vorzugsweise Coronabehandlung, auf mindestens einer Fläche mit einer spezifischen Energie von 10 bis 100 Wmin/m², vorzugsweise 20 bis 70 Wmin/m², behandelt, um die adhäsiven Eigenschaften der Folie zu verbessern.

Wenn höhere Zugfestigkeitswerte gefordert werden, sollte der Füllstoffgehalt unter 12 Gew.-% (bezogen auf das Gesamtgewicht der weichmacherfreien Polyolefinfolienbahn), vorzugsweise unter 10 Gew.-%, liegen, da sich bei höheren Gewichtskonzentrationen der im Rahmen der erfindungsgemäßen Kombination und der genannten Füllstoffe die Zugfestigkeit etwas verschlechtert.

<u>Versuchsreihe 1</u>

Mischungen aus Polypropylen-Homopolymerisat (PP) mit einer Dichte von 0,91 g/cm³ (kristalliner Anteil mit ca. 60 %) Mfi 230/2,16 Kp 7 g/10 min. und verschiedenen Anteilen an Ethylen-Acrylsäurecopoly-

von amorphem $SiO_2$, mittlere Teilchengröße 3 μm wurden auf einer Breitschlitzanlage bei 220 °C zu 100 μm dicken Folien extrudiert. Die Temperatur der Kühlwalze betrug 80 °C. Diese Folien wurden anschließend einer Corona-Behandlung mit einer Intensität von ca.

$$200 \ \frac{m \ Ws}{cm^2}$$

unterzogen.

An diesen Folien wurden anschließend folgende Prüfungen durchgeführt:

Zugprüfung nach DIN 53455 Probekörper Nr. 5 Oberflächenspannungsmessung mit Testflüssigkeiten Verklebung mit Harnstoff-Formaldehydharz bei 120 °C während 10 sec. bei einem Preßdruck von 10 kp/cm [2].

Messung der Schälfestigkeit eines 2,4 cm breiten Streifens mittels Dynamometer bei einem Abzugswinkel von 90 °C. Die Änderung der Oberflächenspannung und der Schälfestigkeit bei Wärmelagerung 12 h bei 90 °C wurden zum Nachweis der Haftungspermanenz gemessen.

Die Ergebnisse dieser Prüfung sind in nachfolgender Tabelle zusammengefaßt und zeigen den Einfluß des Anteils an Ethylen-Acrylsäure-Copolymerisat (EAA) bei gleichbleibendem erfindungsgemäßen Füllstoffgehalt ($SiO_2$).

| Rezeptur | | Oberflächenspannung $10^{-3} Nm^{-1}$ Coronabehandlung | | | Schälfestigkeit kp/2,4 cm Harnstoff-Harz Verklebung | | | Zugfestigkeit N/mm$^2$ | | Dehnung % | |
|---|---|---|---|---|---|---|---|---|---|---|---|
| | | vor | nach | 12 h bei 90°C | vor | nach | 12 h bei 90°C | l | g | l | g |
| **1.1** | | | | | | | | | | | |
| PP | 98 Gew.-% | 28 | 41 | 38 | 0 | 0,2 | 0,1 | 30 | 29 | 520 | 530 |
| $SiO_2$ | 2 Gew.-% | | | | | | | | | | |
| EAA | 0 Gew.-% | | | | | | | | | | |
| **1.2** | | | | | | | | | | | |
| PP | 96 Gew.-% | 28 | 46 | 44 | 0 | 0,9 | 0,7 | 31 | 28,5 | 540 | 520 |
| $SiO_2$ | 2 Gew.-% | | | | | | | | | | |
| EAA | 2 Gew.-% | | | | | | | | | | |
| **1.3** | | | | | | | | | | | |
| PP | 93 Gew.-% | 28 | 48 | 46 | 0 | 1,3 | 1,1 | 33 | 30 | 560 | 570 |
| $SiO_2$ | 2 Gew.-% | | | | | | | | | | |
| EAA | 5 Gew.-% | | | | | | | | | | |
| **1.4** | | | | | | | | | | | |
| PP | 88 Gew.-% | 28 | 48 | 48 | 0 | 1,6 | 1,3 | 32 | 30 | 560 | 550 |
| $SiO_2$ | 2 Gew.-% | | | | | | | | | | |
| EAA | 10 Gew.-% | | | | | | | | | | |
| **1.5** | | | | | | | | | | | |
| PP | 78 Gew.-% | 28 | 46 | 46 | 0 | 1,2 | 1,0 | 35 | 25 | 640 | 520 |
| $SiO_2$ | 2 Gew.-% | | | | | | | | | | |
| EAA | 20 Gew.-% | | | | | | | | | | |

Man erkennt aus der Tabelle, daß der Bereich guter Haftung und gleichmäßiger Festigkeitseigenschaften in Längs- und Querrichtung bei einem Anteil von Ethylen-Acrylsäure-Copolymerisat (EAA) von 2,0 bis 10,0 Gew.-%, der Bereich verbesserter Oberflächenspannung und Schälfestigkeit zwischen 2 und 20 Gew.-% liegt.

Versuchsreihe 2

Mit den Produkten aus Beispiel 1 wurde bei einem Anteil des Ethylen-Copolymerisates (EAA) von 5 Gew.-% der $SiO_2$-Zusatz variiert. Die Folien wurden entsprechend Beispiel 1 hergestellt und geprüft. Die nachfolgend dargestellten Prüfergebnisse zeigen den Einfluß des $SiO_2$-Anteils.

| Rezeptur | | Oberflächenspannung $10^{-3}\,Nm^{-1}$ Coronabehandlung | | | Schälfestigkeit kp/2,4 cm Harnstoff-Harz Verklebung | | | Zugfestig-keit $N/mm^2$ | | Dehnung % | |
|---|---|---|---|---|---|---|---|---|---|---|---|
| | | vor | nach | 12 h bei 90°C | vor | nach | 12 h bei 90°C | l | g | l | g |
| 2.1 | | | | | | | | | | | |
| PP | 95 Gew.-% | 28 | 43 | 41 | 0 | 0,3 | 0,1 | 33 | 28 | 550 | 540 |
| $SiO_2$ | 0 Gew.-% | | | | | | | | | | |
| EAA | 5 Gew.-% | | | | | | | | | | |
| 2.2 | | | | | | | | | | | |
| PP | 94 Gew.-% | 28 | 46 | 44 | 0 | 0,5 | 0,3 | 37 | 30 | 580 | 540 |
| $SiO_2$ | 1 Gew.-% | | | | | | | | | | |
| EAA | 5 Gew.-% | | | | | | | | | | |
| 2.3 | | | | | | | | | | | |
| PP | 92 Gew.-% | 28 | 48 | 46 | 0 | 1,5 | 1,3 | 33 | 31 | 560 | 520 |
| $SiO_2$ | 3 Gew.-% | | | | | | | | | | |
| EAA | 5 Gew.-% | | | | | | | | | | |
| 2.4 | | | | | | | | | | | |
| PP | 90 Gew.-% | 28 | 52 | 48 | 0 | 2,5 | 2,2 | 31 | 28 | 530 | 320 |
| $SiO_2$ | 5 Gew.-% | | | | | | | | | | |
| EAA | 5 Gew.-% | | | | | | | | | | |
| 2.5 | | | | | | | | | | | |
| PP | 85 Gew.-% | 28 | 52 | 48 | 0 | 3 | 2,8 | 27 | 23 | 490 | 180 |
| $SiO_2$ | 10 Gew.-% | | | | | | | | | | |
| EAA | 5 Gew.-% | | | | | | | | | | |

Die Ergebnisse zeigen zunehmende Haftung mit zunehmendem $SiO_2$-Anteil, wobei sich jedoch bei 10 Gew.-% $SiO_2$ und darüber die Zugfestigkeitseigenschaften (stufenweise) etwas verschlechtern.

<u>Versuchsreihe 3</u>

Den Produkten entsprechend Beispiel 1 wurden 5 - 20 Gew.-% Polyethylen hoher Dichte (HD-PE) Dichte 0,953 Mfi 190/2,16 Kp 2,0 g/10 min. anstelle der entsprechenden Menge des Propylen-Homopolymerisates (PP) zugesetzt und die Extrusion und Prüfung unter gleichen Bedingungen wie Beispiel 1 durchgeführt.
Der Einfluß HD-PE-Anteils ist auf folgender Tabelle zu ersehen.

| Rezeptur | | Oberflächenspannung $10^{-3} Nm^{-1}$ Coronabehandlung | | | Schälfestigkeit kp/2,4 cm Harnstoff-Harz Verklebung | | | Zugfestigkeit N/mm$^2$ | | Dehnung % | |
|---|---|---|---|---|---|---|---|---|---|---|---|
| | | vor | nach | 12 h bei 90°C | vor | nach | 12 h bei 90°C | l | g | l | g |
| 3.1 | | | | | | | | | | | |
| PP | 88 Gew.-% | 28 | 48 | 48 | 0 | 1,3 | 1,2 | 35 | 32 | 650 | 605 |
| PE | 5 Gew.-% | | | | | | | | | | |
| SiO$_2$ | 2 Gew.-% | | | | | | | | | | |
| EAA | 5 Gew.-% | | | | | | | | | | |
| 3.2 | | | | | | | | | | | |
| PP | 83 Gew.-% | 28 | 52 | 50 | 0 | 2,0 | 1,6 | 37 | 30 | 740 | 630 |
| PE | 10 Gew.-% | | | | | | | | | | |
| SiO$_2$ | 2 Gew.-% | | | | | | | | | | |
| EAA | 5 Gew.-% | | | | | | | | | | |
| 3.3 | | | | | | | | | | | |
| PP | 73 Gew.-% | 28 | 52 | 50 | 0 | 3 | 2,9 | 38 | 28 | 799 | 615 |
| PE | 20 Gew.-% | | | | | | | | | | |
| SiO$_2$ | 2 Gew.-% | | | | | | | | | | |
| EAA | 5 Gew.-% | | | | | | | | | | |

Die Ergebnisse zeigen, daß die Haftung nochmals verbessert wird, wenn das Polypropylen (PP) anteilsmäßig durch HD-PE ersetzt wird, wobei bei 20 Gew.-% HD-PE-Anteil eine gewisse Anisotropie der Zugfestigkeitseigenschaften festzustellen ist.

Aus der beigefügten Abbildung sind Ausführungsformen der Kunststoffolienbahn schematisch dargestellt.

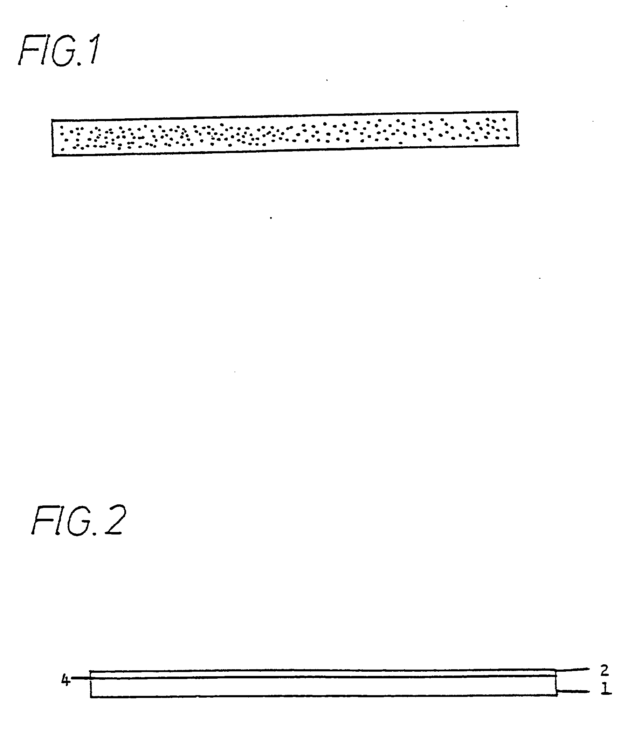

In Fig. 1 ist ein Querschnitt durch eine Kunststofffolienbahn, die die erfindungsgemäße Zusammensetzung aufweist, schematisch dargestellt (Monofolie).

In Fig. 2 ist unter Ziffer 1 die erfindungsgemäße Folienbahn (als Querschnitt) dargestellt, die eine Oberschicht oder transparente Lackschicht (2) aufweist.

Zwischen der Folienbahn (1) und der transparenten Lackschicht (2) ist die partiell oder vollflächig aufgebrachte Farbdruckschicht (4) angeordnet.

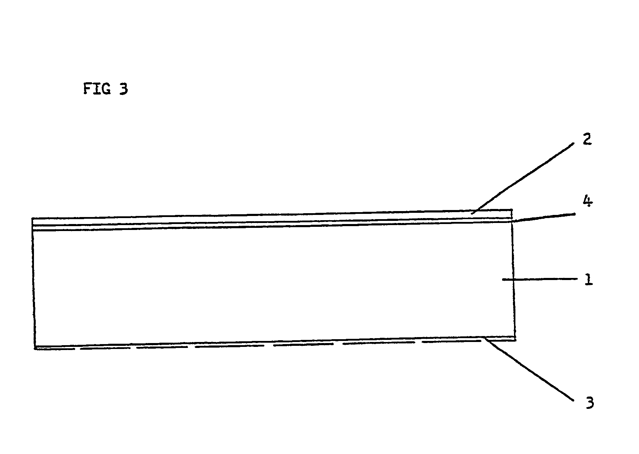

In Fig. 3 ist die Folienbahn mit entsprechendem Aufbau wie in Fig. 2 im Querschnitt schematisch dargestellt. Auf der unteren Fläche der Folienbahn ist eine Klebstoffschicht (3) oder eine Schicht einer Komponenten, eines Härters, eines Polymerisationsbestandteiles, Vorpolymerisates oder Vorkondensates dargestellt.

## Patentansprüche

1. Weichmacherfreie Polyolefinfolie oder Polyolefinfolienbahn bestehend aus einem Gemisch oder einer Legierung aus mindestens einem Polyolefin mit einem teilkristallinen Anteil in Gewichtsmengen von
78 bis 99,2 Gew.-%, vorzugsweise
80 bis 98 Gew.-%
und
22 bis 0,8 Gew.-%, vorzugsweise
20 bis 2 Gew.-%,
eines Gemisches bestehend aus mindestens einem feinteiligen Füllstoff oder Füllstoffgemisch und mindestens einem Co- und/oder Pfropfpolymerisat aus Ethylen oder Propylen mit ungesättigten Dicarbonsäuren, vorzugsweise Ethylen-Acrylsäure-, Ethylen-Methacrylsäure-, Ethylen-Maleinsäure- oder Ethylen-Maleinsäureanhydrid-Co- und/oder Pfropfpolymerisat, Propylen-Maleinsäure- oder Propylen-Maleinsäureanhydrid-, Propylen-Acrylsäure-Co- und/oder -Pfropfpolymerisat oder Gemische oder Legierungen von zwei oder mehreren der Copolymerisate sowie ggf. Verarbeitungshilfsmitteln, dadurch gekennzeichnet, daß das Gemisch oder die Legierung aus mindestens einem Polyolefin mit einem teilkristallinen Anteil aus einem Propylenhomopolymerisat mit einem kristallinen Anteil
unter 75 %, vorzugsweise
unter 70 %,
Propylen-Ethylen-Copolymerisat oder -Pfropfpolymerisat mit einem kristallinen Anteil
unter 70 %, vorzugsweise
unter 65 %,

oder einem Polyethylen hoher Dichte, vorzugsweise einer Dichte über 0,94 g/cm³, mit einem kristallinen Anteil unter 70 %, vorzugsweise unter 65 %, besteht und das Verhältnis des feinteiligen, nicht schicht- oder plättchenförmigen Füllstoffes zu dem Copolymerisat oder Pfropfpolymerisat auf der Basis von Ethylen oder Propylen mit ungesättigter Dicarbonsäure bzw. deren Anhydrid in der Polyolefinfolie oder Polyolefinfolienbahn 1 : 20 bis 2 : 1, vorzugsweise 1 : 10 bis 1 : 1, beträgt, der nicht schicht- oder plättchenförmige Füllstoff aus mindestens einem partikelförmigen Füllstoff mit einer mittleren Teilchengröße oder einem mittleren Körnungsdurchmesser von

kleiner als 10 μm, vorzugsweise

kleiner als 5 μm,

aus einem Hydroxid und/oder Oxid des Magnesiums, Aluminiums und/oder Siliciums, vorzugsweise aus einem Oxid von Silicium, besteht und das Ethylen-oder Propylen-Co- oder -Pfopfpolymerisat einen Schmelzindex 190 °C/2,16 Kp mehr als 1,5 g/10 min und einen Dicarbonsäureanteil bzw. Anhydridanteil von 1,2 bis 25 Gew.-%, vorzugsweise

1,5 bis 20 Gew.-%

(bezogen auf 100 Gew.-Teile des Co- oder Pfropfpolymerisates aus Ethylen oder Propylen und ungesättigter Dicarbonsäure bzw. Dicarbonsäureanhydrid), aufweist.

2. Weichmacherfreie Polyolefinfolie oder Polyolefinfolienbahn nach Anspruch 1, dadurch gekennzeichnet, daß der Schmelzindex (190 °C/2,16 Kp) des Propylenhomo- oder Propylen-Ethylen-Copolymerisates oder des Polyethylens hoher Dichte kleiner ist als der Schmelzindex (190 °C/2,16 Kp) des Co- oder Pfropfpolymerisates auf der Basis von Ethylen oder Propylen mit ungesättigter Dicarbonsäure oder deren Anhy                              drid.

3. Weichmacherfreie Polyolefinfolie oder Polyolefinfolienbahn nach Ansprüchen 1 und 2, dadurch gekennzeichnet, daß die Folie oder Folienbahn eine Oberflächenspannung von

40 bis 72 (10⁻³Nm⁻¹), vorzugsweise 44 bis 68 (10⁻³Nm⁻¹)

(gemessen nach der Herstellung und Einwirkung energiereicher Strahlungen nach einem Zeitraum von mindestens 6 Monaten, vorzugsweise 12 Monaten), aufweist.

4. Weichmacherfreie Polyolefinfolie oder Polyolefinfolienbahn nach einem oder mehreren der Ansprüche 1 bis 3, dadurch gekennzeichnet, daß

5 bis 20 Gew.-%, vorzugsweise 7 bis 15 Gew.-%,

des Propylenhomo- oder Propylen-Ethylen-Copolymerisates durch die gleiche Menge Polyethylen, vorzugsweise Polyethylen hoher Dichte mit einer Dichte größer als 0,95 g/cm³ und mit einem Schmelzindex 190/2,16 von 1,5 - 15 g/10 min ersetzt ist.

5. Weichmacherfreie Polyolefinfolie oder Polyolefinfolienbahn nach einem oder mehreren der Ansprüche 1 bis 4, dadurch gekennzeichnet, daß auf der Polyolefinfolie oder Polyolefinfolienbahn partiell oder vollflächig eine Druckschicht, vorzugsweise Farbdruckschicht, angeordnet ist.

6. Weichmacherfreie Polyolefinfolie oder Polyolefinfolienbahn nach einem oder mehreren der Ansprüche 1 bis 5, dadurch gekennzeichnet, daß eine Lackschicht, vorzugsweise eine transparente oder translucente Lackschicht, partiell oder vollflächig die Druckschicht und ggf. nicht bedruckte Stellen der Polyolefinfolie oder Polyolefinfolienbahn überdekkend angeordnet ist, wobei die mittlere Schichtdicke der Lackschicht

1 bis 20 μm, vorzugsweise

2 bis 15 μm,

beträgt.

7. Weichmacherfreie Polyolefinfolie oder Polyolefinfolienbahn nach einem oder mehreren der Patentansprüche 1 bis 6, dadurch gekennzeichnet, daß auf der Rückseite der Polyolefinfolie oder Polyolefinfolienbahn eine Klebstoffschicht oder eine Komponente, Härter oder Polymerisationsbestandteil der Klebstoffschicht in einer Schichtdicke von

3 bis 100 μm, vorzugsweise

5 bis 80 μm,

angeordnet ist.

8. Verfahren zur Herstellung weichmacherfreier Polyolefinfolien oder Polyolefinfolienbahnen bestehend aus einem Gemisch oder einer Legierung aus mindestens einem Polyolefin mit einem teilkristallinen Anteil in Gewichtsmengen von

78 bis 99,2 Gew.-%, vorzugsweise

80 bis 98 Gew.-%,

und

22 bis 0,8 Gew.-%, vorzugsweise

20 bis 2 Gew.-%,

eines Gemisches bestehend aus mindestens einem feinteiligen Füllstoff oder Füllstoffgemisch und mindestens einem Co- und/oder Pfropfpolymerisat aus Ethylen oder Propylen mit ungesättigten Dicarbonsäuren, vorzugsweise Ethylen-Acrylsäure-, Ethylen-Methacrylsäure-, Ethylen-Maleinsäure- oder Ethylen-Maleinsäureanhydrid-Co- und/oder Pfropfpolymerisat, Propylen-Maleinsäure- oder Propylen-Maleinsäureanhydrid-, Propylen-Acrylsäure-Co- und/oder -Pfropfpolymerisat oder Gemische oder Legierungen von zwei oder mehreren der Copolymerisate sowie ggf. Verarbeitungshilfsmitteln, dadurch gekennzeichnet, daß das Gemisch oder die Legierung aus mindestens einem Polyolefin, die als Polyolefin mit einem teilkristallinen Anteil aus einem Propylenhomopolymerisat mit einem kristallinen Anteil unter 75 %, vorzugsweise unter 70 %,

Propylen-Ethylen-Copolymerisat mit einem kristallinen Anteil unter 70 %, vorzugsweise unter 65 %,

und/oder einem Polyethylen hoher Dichte, vorzugsweise einer Dichte über 0,94 g/cm³, mit einem kristallinen Anteil unter 70 %, vorzugsweise unter 65 %, enthält, mit dem Füllstoff, sowie gegebenenfalls Verarbeitungshilfsmitteln bei Temperaturen von 10 bis 80 °C, vorzugsweise 20 bis 70 °C,

über dem Schmelzpunkt oder Schmelzbereich in einer Plastifiziervorrichtung, vorzugsweise Extruder, verarbeitet, zu Folien oder Folienbahnen verformt wird, wobei das Verhältnis des nicht schicht- oder plättchenförmigen Füllstoffes zu d em Copolymerisat oder Pfropfpolymerisat auf der Basis von Ethylen oder Propylen mit ungesättigter Dicarbonsäure bzw. deren Anhydrid in der Polyolefinfolie oder Polyolefinfolienbahn 1 : 20 bis 2 : 1, vorzugsweise 1 : 10 bis 1 : 1, beträgt, der nicht schicht- oder plättchenförmige Füllstoff aus mindestens einem partikelförmigen, mit einer mittleren Teilchengröße oder einem mittleren Körnungsdurchmesser von kleiner als 10 μm, vorzugsweise kleiner als 5 μm,

aus einem Hydroxid und/oder Oxid des Magnesiums, Aluminiums und/oder Siliciums, vorzugsweise aus einem Oxid von Silicium, besteht und das Ethylen-oder Propylen-Co- oder -Pfropfpolymerisat einen Schmelzindex 190 °C/2,16 Kp mehr als 1,5 g/10 min und einen Dicarbonsäureanteil bzw. Anhydridanteil von 1,2 bis 25 Gew.-%, vorzugsweise 1,5 bis 20 Gew.-%

(bezogen auf 100 Gew.-Teile des Co- oder Pfropfpolymerisates aus Ethylen oder Propylen und ungesättigter Dicarbonsäure bzw. Dicarbonsäureanhydrid), aufweist.

9. Verfahren nach Anspruch 8, dadurch gekennzeichnet, daß die Polyolefinfolie, die vorzugsweise extrudiert, gegossen, gewalzt und/oder in ähnlicher Weise geformt wird, während oder nach der Herstellung mit einer energiereichen Strahlung, vorzugsweise Coronabehandlung, auf mindestens einer Fläche mit einer spezifischen Energie von 10 bis100 Wmin/m², vorzugsweise 20 bis 70 Wmin/m², behandelt wird.

10. Verwendung der weichmacherfreien Polyolefinfolie oder Polyolefinfolienbahn nach einem oder mehreren der Ansprüche 1 bis 7 zur Herstellung kunststoffbeschichteter Platten, Tafeln, Wandpaneele oder Formteile, bestehend aus mindestens einer Schicht, Platte, Folie oder einem Formkörper aus Metall, Kunststoff, Holz und/oder Holzwerkstoff, einer Klebstoffschicht oder Haftvermittlerschicht, auf der die weichmacherfreie Polyolefinfolie oder Polyolefinfolienbahn angeordnet ist.

11. Verwendung der weichmacherfreien Polyolefinfolie oder Polyolefinfolienbahn nach einem oder mehreren der Ansprüche 1 bis 7 zur Herstellung kunststoffbeschichteter Platten, Tafeln, Wandpaneele oder Formteile, bestehend aus mindestens einer Schicht, Platte, Folie oder einem Formkörper aus Metall, Kunststoff, Holz und/oder Holzwerkstoff, auf der die weichmacherfreie Polyolefinfolie oder Polyolefinfolienbahn ohne Mitverwendung einer Klebstoffschicht oder Haftvermittlerschicht angeordnet ist.

## Claims

1. Plasticiser-free polyolefin film or polyolefin film web consisting of a mixture or an alloy of at least one polyolefin with a partially crystalline proportion, in an amount by weight of 78 to 99.2 weight per cent, preferably 80 to 98 weight per cent and

22 to 0.8 weight per cent, preferably 20 to 2 weight per cent,

of a mixture consisting of at least one finely divided filler or filler mixture and at least one copolymer and/or graft polymer of ethylene or propylene with unsaturated dicarboxylic acids, preferably co- and/or graft polymers of ethylene/acrylic acid, ethylene/methacrylic acid, ethylene/maleic acid or ethylene/maleic anhydride, co- and/or graft polymers of propylene maleic acid or propylene/maleic anhydride, propylene/acrylic acid or mixtures or alloy of two or more of the copolymers optionally together with processing aids, characterised in that the mixture or the alloy of at least one polyolefin with a partially crystalline proportion consists of a propylene homopolymer with a crystalline proportion under 75%, preferably under 70%,

propylene/ethylene copolymer or graft polymer with a crystalline proportion
under 70%, preferably
under 65%,
or a polyethylene of high density, preferably a density above 0.94 g/cm³, with a crystalline proportion under 70%, preferably under 65%, and the ratio of the finely divided non layer-like or plate-like filler to the copolymer or graft polymer on the basis of ethylene or propylene with unsaturated dicarboxylic acid or its anhydride in the polyolefin film or polyolefin film web is 1:20 to 2:1, preferably 1:10 to 1:1, the non layer-like or plate-like filler consists of at least one particle-like filler with an average particle size or an average grain diameter of
less than 10 μm, preferably
less than 5 μm,
of a hydroxide and/or oxide of magnesium, of aluminium and/or of silicon, preferably of an oxide of silicon, and the ethylene or propylene copolymer or graft polymer has a melt index 190°C/2.16 Kp more than 1.5 g/10 min and a dicarboxylic acid and anhydride proportion of
1.2 to 25 weight per cent, preferably
1.5 to 20 weight per cent,
(calculated on 100 parts by weight of the copolymer or graft polymer of ethylene or propylene and unsaturated dicarboxylic acid or dicarboxylic anhydride).

2. Plasticiser-free polyolefin film or polyolefin film web according to Claim 1, characterised in that the melt index (190°C/2.16 Kp) of the propylene homopolymer or propylene/ethylene copolymer or the polyethylene of high density is less than the melt index (190°C/2.16 Kp) of the copolymer or graft copolymer based on ethylene or propylene with unsaturated dicarboxylic acid or its anhydride.

3. Plasticiser-free polyolefin film or polyolefin film web according to Claims 1 and 2, characterised in that the film or film web has a surface tension of
40 to 72 (10⁻³NM⁻¹), preferably
44 to 68 (10⁻³Nm⁻¹)
(measured after the production and influence of energy rich radiation after a period of at least six months, preferably twelve months).

4. Plasticiser-free polyolefin film or polyolefin film web according to one or more of Claims 1 to 3, characterised in that
5 to 20 weight per cent, preferably
7 to 15 weight per cent,
of the propylene homopolymer or propylene/ethylene copolymer is replaced by the same amount of polyethylene, preferably polyethylene of high density with a density greater than 0.95 g/cm³ and a melt index 190/2.16 of 1.5 to 15 g/10 min.

5. Plasticiser-free polyolefin film or polyolefin film web according to one or more of Claims 1 to 4, characterised in that a print layer, preferably a coloured print layer, is arranged on the polyolefin film or polyolefin film web over part or all of the surface.

6. Plasticiser-free polyolefin film or polyolefin film web according to one or more of Claims 1 to 5, characterised in that a lacquer layer, preferably a transparent or translucent lacquer layer, is arranged covering part or all of the surface of the print layer and optionally unprinted regions of the polyolefin film or polyolefin film web, the average layer thickness of the lacquer layer being
1 to 20 μm, preferably
2 to 15 μm.

7. Plasticiser-free polyolefin film or polyolefin film web according to one or more of Claims 1 to 6, characterised in that an adhesive layer or a component, hardener or polymerisation constituent of the adhesive layer is arranged on the reverse side of the polyolefin film or polyolefin film web in a layer thickness of
3 to 100 μm, preferably
5 to 80 μm.

8. Process for the production of plasticiser-free polyolefin films or polyolefin film webs consisting of a mixture or an alloy of at least one polyolefin with a partially crystalline proportion, in amounts by weight of
78 to 99.2 weight per cent, preferably
80 to 98 weight per cent,
and
22 to 0.8 weight per cent, preferably
20 to 2 weight per cent,
of a mixture consisting of at least one finely divided filler or filler mixture and at least one copolymer and/or graft polymer of ethylene or propylene with unsaturated dicarboxylic acids, preferably co- and/or graft polymers of ethylene/acrylic acid, ethylene/metharcrylic acid, ethylene/maleic acid or ethylene/maleic anhydride, co- and/or graft polymer of propylene/maleic acid or propylene/maleic anhydride, propylene/acrylic acid or mixtures or alloys of two or more of the copolymers, optionally together with processing aids, characterised in that the mixture or the alloy of at least one polyolefin, which as polyolefin with a partially crystalline proportion of a propylene homopolymer with a crystalline proportion

under 75%, preferably
under 70%,
contains propylene/ethylene copolymer with a crystalline proportion
under 70%, preferably
under 65%,
and/or a polyethylene of high density, preferably a density above 0.94 g/cm³, with a crystalline proportion below 70%, preferably below 65%, is processed in a plasticising apparatus, preferably extruder, with the filler as well as optionally processing aids at temperatures of
10 to 80°C, preferably
20 to 70°C,
above the melting point or melting region to form films or film webs, the ratio of the non-layer-like or plate-like filler to the copolymer or graft polymer on the basis of ethylene or propylene with unsaturated dicarboxylic acid or its anhydride in the polyolefin film or polyolefin film web being 1:20 to 2:1, preferably 1:10 to 1:1, the non-layer-like or plate-like filler consisting of at least one particulate (filler) with an average particle size or an average grain diameter of
less than 10 μm, preferably
less than 5 μm,
of a hydroxide and/or oxide of magnesium, aluminium and/or silicon, preferably of an oxide of silicon, and the ethylene or propylene co- or graft polymer having a melt index 190°C/2.16 Kp more than 1.5 g/10 min and a dicarboxylic acid or anhydride proportion of
1.2 to 25 weight per cent, preferably
1.5 to 20 weight per cent
(based on 100 parts by weight of the copolymer or graft polymer of ethylene or propylene and unsaturated dicarboxylic acid or dicarboxylic anhydride).

9. Process according to Claim 8, characterised in that the polyolefin film, which is preferably extruded, cast, rolled and/or similarly formed, is treated during or after production with an energy-rich radiation, preferably corona treatment, on at least one surface with a specific energy of
10 to 100 Wmin/m², preferably
20 to 70 Wmin/m².

10. Use of the plasticiser-free polyolefin film or polyolefin film web according to one or more of Claims 1 to 7 for the production of plastics coated plates, tables, wall panels or formed parts consisting of at least one layer, plate, film or a shaped body of metal, plastics, wood and/or timber products, an adhesive layer or coupling agent layer on which the plasticiser-free polyolefin film or polyolefin film web is arranged.

11. Use of the plasticiser-free polyolefin film or polyolefin film web according to one or more of Claims 1 to 7 for the production of plastics coated plates, boards, wall panels or shaped parts consisting of at least one layer, plate, film or shaped body of metal, plastics, wood, and/or timber products, on which the plasticiser-free polyolefin film or polyolefin film web is arranged without the provision of an adhesive or coupling agent layer.

**Revendications**

1. Feuille ou bande de feuille en polyoléfine exempte de plastifiant constituée d'un mélange ou d'un alliage formé d'au moins une polyoléfine comportant une fraction partiellement cristalline, en une quantité pondérale de
78 à 99,2% en poids, de préférence
80 à 98% en poids,
et
22 à 0,8% en poids, de préférence
20 à 1,2% en poids,
d'un mélange constitué d'au moins une charge ou un mélange de charges à l'état finement divisé et d'au moins un copolymère ou un polymère greffé d'éthylène ou de propylène avec des acides dicarboxyliques insaturés, de préférence un copolymère ou un polymère greffé éthylène-acide acrylique, éthylène-acide méthacrylique, éthylène-acide maléique ou éthylène-anhydride maléique, un copolymère ou un polymère greffé propylène-acide maléique ou propylène-anhydride maléique, propylène-acide acrylique ou encore des mélanges ou des alliages de deux ou plusieurs de ces copolymères, de même qu'éventuellement des adjuvants d'ouvrabilité caractérisé en ce que le mélange ou l'alliage est constitué d'au moins une polyoléfine comportant une fraction partiellement cristalline d'un homopolymère de propylène avec une fraction cristalline
inférieure à 75%, de préférence
inférieure à 70%,
d'un copolymère ou d'un polymère greffé propylène-éthylène comportant une fraction cristalline
inférieure à 70%, de préférence
inférieure à 65%,
ou d'un polyéthylène de haute densité, de préférence présentant une densité supérieure à 0,94 g/cm³

11

EP 0 260 444 B1

comportant une fraction cristalline inférieure à 70%, de préférence inférieure à 65% et que le rapport de la charge non stratifiée ou en plaquettes finement divisée au copolymère ou polymère greffé à base d'éthylène ou de propylène avec des acides dicarboxylique ou leurs anhydrides insaturés dans la feuille ou bande de polyoléfine est compris entre 1:20 et 2:1, de préférence 1:10 et 1:1, la charge non stratifiée ou en plaquettes, constituée d'au moins une charge à l'état de particules présentant une dimension moyenne de particules ou un diamètre granulométrique moyen

inférieur à 10 μm, de préférence
inférieur à 5 μm,

étant constituée d'un hydroxyde et/ou d'un oxyde de magnésium, d'aluminium et/ou de silicium, de préférence d'un oxyde de silicium et le copolymère ou polymère greffé d'éthylène ou de propylène présentent un indice de fusion 190°C/2,16 kg supérieur à 1,5 g/10 mn et une teneur en acide ou en anhydride dicarboxylique de 1,2 à 25%, de préférence 1,5 à 20% en poids, (exprimé pour 100 parties en poids du copolymère ou du polymère greffé d'éthylène ou de propylène et d'acide ou d'anhydride dicarboxylique insaturé).

2. Feuille ou bande de feuille en polyoléfine exempte de plastifiant selon la revendication 1 caractérisée en ce que l'indice de fusion (190°C/2,16 kg) de l'homopolymère de propylène ou du copolymère propylène-éthylène ou du polyéthylène de haute densité est inférieur à la valeur de l'indice de fusion (190°C/2,16 kg) du copolymère ou du polymère greffé à base d'éthylène ou de propylène avec les acides dicarboxyliques insaturés ou leurs anhydrides.

3. Feuille ou bande de feuille de polyoléfine exempte de plastifiant selon la revendication 1 ou 2 caractérisée en ce que la feuille ou bande de feuille présente une tension superficielle de

40 à 72 ($10^{-3}$Nm$^{-1}$), de préférence
44 à 68 ($10^{-3}$Nm$^{-1}$),

(mesurées après leur production et les avoir soumis à des radiations de haute énergie, après une durée d'au moins 6 mois, de préférence 12 mois).

4. Feuille ou bande de feuille en polyoléfine exempte de plastifiant selon une ou plusieurs des revendications 1 à 3 caractérisée en ce qu'on remplace

5 à 20% en poids, de préférence
7 à 15% en poids,

de l'homopolymère de propylène ou du copolymère propylène-éthylène par une quantité identique de polyéthylène, de préférence du polyéthylène haute densité présentant une densité supérieure à 0,95 g/cm$^3$ et un indice de fusion 190/2,16 de 1,5 à 15 g/10 mn.

5. Feuille ou bande de feuille en polyoléfine exempte de plastifiant selon une ou plusieurs des revendications 1 à 4 caractérisée en ce que la feuille ou bande de polyoléfine exempte de plastifiant reçoit une couche d'impression, de préférence une couche d'impression colorée qui la recouvre partiellement ou totalement.

6. Feuille ou bande de feuille en polyoléfine exempte de plastifiant selon une ou plusieurs des revendications 1 à 5 caractérisée en ce qu'on applique une couche de laque, de préférence une couche de laque transparente ou translucide qui recouvre partiellement ou totalement la couche imprimée et éventuellement les endroits non imprimés de la feuille ou bande de feuille de polyoléfine, l'épaisseur moyenne de la couche de laque étant de

1 à 20 μm, de préférence
2 à 15 μm.

7. Feuille ou bande de feuille en polyoléfine exempte de plastifiant selon une ou plusieurs des revendications 1 à 6 caractérisée en ce qu'on dispose sur le verso de la feuille ou de la bande de feuille de polyoléfine une couche de colle ou un composant, durcisseur ou composant de polymérisation ou un prépolymère ou un précondensat d'une couche de colle présentant une épaisseur de couche de

3 à 100 μm, de préférence
5 à 80 μm.

8. Procédé pour la production de feuilles ou de bandes de feuilles en polyoléfine exemptes de plastifiant constituées d'un mélange ou d'un alliage formé d'au moins une polyoléfine comportant une fraction partiellement cristalline, en une quantité pondérale de

78 à 99,2% en poids, de préférence
80 à 98% en poids,

et

22 à 0,8% en poids, de préférence
20 à 2% en poids,

d'un mélange constitué d'au moins une charge ou d'un mélange de charges, à l'état finement divisé et d'au moins un copolymère ou un polymère greffé d'éthylène ou de propylène avec des acides dicarboxyliques insaturés, de préférence un copolymère ou un polymère greffé éthylène-acide acrylique, éthylène-acide méthacrylique, éthylène-acide maléique ou éthylène-anhydride maléique, un copolymère ou un polymère greffé propylène-acide maléique ou propylène-anhydride maléique, propylène-acide acrylique ou encore des mélanges ou des alliages de deux ou plusieurs de ces copolymères, de même qu'éventuellement des adjuvants d'ouvrabilité caractérisé en ce que le mélange ou l'alliage d'au moins une polyoléfine qui comporte comme polyoléfine avec une fraction partiellement cristalline un homopolymère de propylène avec une fraction cristalline
inférieure à 75%, de préférence
inférieure à 70%,
un copolymère propylène-éthylène comportant une fraction cristalline
inférieure à 70%, de préférence
inférieure à 65%,
et/ou un polyéthylène de haute densité, de préférence présentant une densité supérieure à 0,94 g/cm$^3$ comportant une fraction cristalline
inférieure à 70%, de préférence
inférieure à 65%,
est transformé avec la charge de même qu'avec éventuellement des adjuvants d'ouvrabilité à des températures de
10 à 80°C, de préférence
20 à 70°C,
supérieures au point de fusion ou à la plage de fusion dans une installation de plastification, de préférence une boudineuse (machine d'extrusion) et est formé en feuille ou bande de feuille de manière que le rapport de la charge non stratifiée ou en plaquettes au copolymère ou polymère greffé à base d'éthylène ou de propylène avec des acides ou des anhydrides dicarboxyliques insaturés dans la feuille ou bande de polyoléfine soit compris entre 1:20 et 2:1, de préférence 1:10 et 1:1, la charge non stratifiée ou en plaquettes constituée d'au moins une charge à l'état de fines particules présentant une dimension moyenne de particules ou un diamètre granulométrique moyen
inférieur à 10 µm, de préférence
inférieur à 5 µm,
étant constituée d'un hydroxyde et/ou d'un oxyde de magnésium, d'aluminium et/ou de silicium, de préférence d'un oxyde de silicium et le copolymère ou polymère greffé d'éthylène ou de propylène (avec des acides dicarboxyliques insaturés) présentant un indice de fusion 190°C/2,16 kg supérieur à 1,5 g/10 mn et une teneur en acide dicarboxylique ou une teneur en anhydride de
1,2 à 25%, de préférence
1,5 à 20% en poids
(exprimé pour 100 parties en poids du copolymère ou du polymère greffé d'éthylène ou de propylène et d'acide dicarboxylique ou d'anhydride dicarboxylique insaturé).

9. Procédé selon la revendication 8 caractérisé en ce que la feuille de polyoléfine qui est de préférence extrudée, coulée, calandrée et/ou formée d'une manière analogue est soumise pendant ou après sa production à une irradiation de haute énergie, de préférence à un traitement corona sur au moins une face à l'aide d'une énergie spécifique de
10 Wmn/m$^2$, de préférence
20 à 70 Wmn/m$^2$.

10. Utilisation de la feuille de polyoléfine ou de la bande de feuille de polyoléfine exempte de plastifiant selon une ou plusieurs des revendications 1 à 7 pour la production de plaques, plateaux, panneaux muraux ou éléments formés revêtues de matière plastique constitués d'au moins une couche, plaque ou feuille ou d'un corps formé de métal, matière plastique, bois et/ou matériau en bois, d'une couche de colle ou d'une couche d'un agent d'adhérence, sur laquelle la feuille de polyoléfine ou bande de feuille de polyoléfine exempte de plastifiant est disposée.

11. Utilisation de la feuille de polyoléfine ou de la bande de feuille de polyoléfine exempte de plastifiant selon une ou plusieurs des revendications 1 à 7 pour la production de plaques, plateaux, panneaux muraux ou éléments formés revêtues de matière plastique constitués d'au moins une couche, plaque ou feuille ou d'un corps formé de métal, matière plastique, bois et/ou matériau en bois, sur laquelle la feuille de polyoléfine ou bande de feuille de polyoléfine exempte de plastifiant est disposée sans recourir à une couche de colle ou à une couche d'un agent d'adhérence.

FIG.1

FIG.2

4 ———

2
1

FIG 3